# EUROPÄISCHE PATENTSCHRIFT

(11) **EP 0 789 816 B1**
(45) Veröffentlichungstag und Bekanntmachung des Hinweises auf die Patenterteilung: **27.05.1998**
(21) Anmeldenummer: 95937813.4
(22) Anmeldetag: 21.10.1995
(51) Int. Cl.: F15B 11/064, E02F 9/22, F15B 21/14

(54) **ENERGIERÜCKGEWINNUNGSVORRICHTUNG**
ENERGY RECOVERY DEVICE
DISPOSITIF DE RECUPERATION D'ENERGIE

(30) Priorität: 31.10.1994 DE 4438899
(43) Veröffentlichungstag der Anmeldung: 20.08.1997
(73) Patentinhaber: HYDAC TECHNOLOGY GMBH, 66273 Sulzbach (DE)
(72) Erfinder: KLAUK, Bernd, D-66125 Dudweiler (DE); SCHOLL, Josef, D-66636 Tholey (DE); BALTES, Herbert, D-66679 Losheim (DE)
(74) Vertreter: Patentanwälte Bartels und Partner
(86) Internationale Anmeldenummer: EP9504133
(87) Internationale Veröffentlichungsnummer: WO9613669

(56) Entgegenhaltungen:
- WO-A-93/11363
- DE-A- 1 180 680
- DE-A- 1 193 877
- DE-U-29 502 919
- FR-A- 2 517 382
- GB-A- 1 540 174

## Beschreibung

Die Erfindung betrifft eine Vorrichtung zur Rückgewinnung von Energie, insbesondere von Lageenergie bei Arbeitsmaschinen, mit mindestens einem zum wechselweisen Bewegen, vorzugsweise zum Heben und Senken einer Arbeitsgerätschaft hydraulisch betätigbaren Arbeitszylinder, der kolbenseitig an einen Hydraulikkreislauf mit einer Pumpe und über eine Verbindungsleitung an einen Hydrospeicher anschließbar ist.

Die Erfindung betrifft ferner eine Vorrichtung zur Rückgewinnung kinetischer Energie mit mindestens einem zum Ansteuern einer Arbeitseinheit dienenden Hydromotor, der an einen Hydraulikkreislauf mit einer Pumpe und über eine Verbindungsleitung an einen Hydrospeicher anschließbar ist.

Eine gattungsgemäße Vorrichtung zur Rückgewinnung von Lageenergie bei Arbeitsmaschinen ist durch die PCT/WO 93/11363 bekannt, bei der zum Heben und Senken der Arbeitsgerätschaft zwei hydraulisch betätigbare Arbeitszylinder dienen, die stangenseitig untereinander fluidführend verbunden sind. Bei dieser bekannten Vorrichtung ist der Kolbenraum des hydraulisch betätigbaren Arbeitszylinders mit dem Hydrospeicher über ein sog. Cartridge-Ventil verbunden, das mit einem Steuerungsverteiler zusammenwirkt, der als Teil einer Steuerungseinrichtung an ein Druckrelais angeschlossen ist. Diese Steuerungseinrichtung ist mit ihrem Steuereingang an einen Niederdruckzweig des Hydraulikkreises angeschlossen, der mit den bewegbaren Teilen der Arbeitsmaschine in Form der Arbeitsgerätschaft zusammenwirkt. Mit dieser bekannten Vorrichtung läßt sich beim Senken der Arbeitsgerätschaft die kolbenseitige Fluidmenge des Arbeitszylinders unter Einbeziehen der jeweiligen abgegebenen Lageenergie, also unter Druck, an den Hydrospeicher abgeben und von dort genau quantifizierbar für den später folgenden Hebevorgang der Arbeitsgerätschaft wieder abrufen, wobei es sich gezeigt hat, daß hierdurch höhere Energiemengen rückgewinnbar sind als bei den bisher vorgeschlagenen Vorrichtungen.

Trotz des guten Energierückgewinnungsverhaltens weist diese bekannte Vorrichtung Nachteile auf. So neigt das Cartridge-Ventil beim Halten der Arbeitsgerätschaft nach einem Senkvorgang unter Last zum "Flattern", d.h. die Arbeitsgerätschaft, meist in Form eines Auslegers, beginnt zu wippen. Diese ungewollte Bewegung der Arbeitsgerätschaft läßt sich gegebenenfalls nur unter Einbeziehen einer sehr kostenaufwendigen Steuervorrichtung in ihrem Umfang mindern. Darüber hinaus öffnet beim Senken der Arbeitsgerätschaft unter Last das Cartridge-Ventil schlagartig mit der Folge, daß bei entleertem Hydrospeicher und hohem Lastaufkommen ein langsames Absenken um eine kleine Wegstrecke, beispielsweise im Millimeterbereich, nicht möglich ist. Auch kommt es zu einer verminderten Leistungsfähigkeit bei Arbeiten, bei denen in Senkrichtung eine zusätzliche Kraft benötigt wird, da der Hydrospeicher mit zunehmender Fluidbefüllung beim Senkvorgang dieser benötigten Kraft reduzierend entgegenwirkt.

Bei einer anderen bekannten Vorrichtung zur Rückgewinnung von Energie nach der EP 0 230 529 B1 findet ebenfalls ein Cartridge-Ventil mit den beschriebenen Nachteilen Verwendung. Diese Vorrichtung wird insbesondere für die hydrostatische Bremsenergie-Rückgewinnung bei Kraftfahrzeugen, wie Lastkraftwagen oder Bussen, eingesetzt. Neben dem Cartridge-Ventil benötigt die Ventilanordnung dieser bekannten Vorrichtung für die Energierückgewinnung ein Wechselventil und an verschiedenen Stellen der Schaltung angeordnet drei Drosseln, was insgesamt die Störanfälligkeit dieser bekannten Vorrichtung erhöht.

Ausgehend von diesem Stand der Technik liegt der Erfindung die Aufgabe zugrunde, eine Vorrichtung zur Rückgewinnung von Energie zu schaffen, die die durch den Einsatz eines Cartridge-Ventils auftretenden Nachteile nicht aufweist, die kostengünstig und funktionssicher im Betrieb ist. Eine dahingehende Aufgabe löst eine Vorrichtung mit den Merkmalen des Anspruches 1 oder des Anspruches 2.

Dadurch, daß gemäß dem kennzeichnenden Teil des Anspruches 1 in der Verbindungsleitung zwei hydraulisch entsperrbare Rückschlagventile angeordnet sind, die mittels einer Steuereinheit, insbesondere in Form eines Wegeventiles abhängig von der Bewegung der Arbeitsgerätschaft abwechselnd aufgesteuert sind, wird über das Wegeventil beim Bewegen in der einen Richtung, insbesondere beim Senken der Arbeitsgerätschaft, einmal das eine Rückschlagventil derart durch den Pumpendruck aufgesteuert, daß der Hydrospeicher fluidseitig von dem Arbeitszylinder befüllt wird, und zum anderen beim entgegengesetzten Bewegen oder Heben das andere Rückschlagventil vergleichbar aufgesteuert, so daß die im Hydrospeicher bevorratete Fluid- oder Energiemenge definiert wieder an den Arbeitszylinder abgebbar ist. Da über die beiden gegenläufig arbeitenden entsperrbaren Rückschlagventile der an den Hydrospeicher angeschlossene Arbeitszylinder sicher von diesem abkoppelbar ist, ist beim Halten der Arbeitsgerätschaft unter Last kein Wippvorgang mehr gegeben und ein langsames millimetergenaues Bewegen ist möglich.

Im übrigen kommt die erfindungsgemäße Vorrichtung mit nur wenigen, sicher funktionierenden Bauteilen aus, was die Kosten reduziert und die Funktionssicherheit erhöht.

Mit denselben Vorteilen läßt sich gemäß dem kennzeichnenden Teil des Anspruches 2 mit einem mit einer Arbeitseinheit zusammenwirkenden Hydromotor abhängig von deren Bewegungszustand kinetische Energie speichern und wieder abgeben. Die Arbeitseinheit kann dabei eine von dem Hydromotor ansteuerbare Linearantriebseinheit sein oder als Bestandteil des Radantriebes bei Kraftfahrzeugen der hydrostatischen Bremsenergierückgewinnung dienen sowie beim Fahrbetrieb mit dem Kraftfahrzeug aufgenommene Bewegungsenergie, beispielsweise im Bereich von Steigungen, an den Fahrantrieb wieder abgeben, um so eine Energierückgewinnung im Betrieb zu erreichen.

Bei einer bevorzugten Ausführungsform der erfindungsgemäßen Vorrichtung ist in der Verbindungsleitung zwischen den beiden entsperrbaren Rückschlagventilen ein Drossel-Rückschlagventil, vorzugsweise mit stufenlos veränderbarem Querschnitt, vorhanden. Hierdurch ist ein kontrolliertes Absenken der Arbeitsgerätschaft bei kolbenseitiger Entleerung des Arbeitszylinders möglich, ohne daß es zu dem eingangs beschriebenen schlagartigen Öffnungsvorgang des Cartridge-Ventiles kommt, was ein langsames und millimetergenaues Absenken unmöglich macht.

Bei einer weiteren bevorzugten Ausführungsform der erfindungsgemäßen Vorrichtung stehen die beiden Arbeitszylinder auf ihrer Kolbenseite über eine weitere Verbindungsleitung miteinander in Verbindung, in die eine Drossel oder Blende sowie ein Rückschlagventil geschaltet sind. Aufgrund dieser Schaltungsanordnung ist es möglich, hydraulische Energie von dem Hydrospeicher für einen der Arbeitszylinder abzurufen und gleichzeitig unter Wirkung der Hydraulikpumpe den Hebevorgang mit oder ohne Last zu unterstützen, indem Hydrauliköl beiden Kolbenräumen zugeführt wird, ohne daß die im Hydrospeicher abgespeicherte Fluidmenge unter Druckverlust in den anderen Arbeitszylinder abfließen kann.

Bei einer weiteren besonders bevorzugten Ausführungsform der erfindungsgemäßen Vorrichtung ist der vom Hydrospeicher abgesperrte Arbeitszylinder stangenseitig an eine Ventilanordnung, vorzugsweise in Form eines 2/2-Wegeventils, angeschlossen, die beim Senken der Arbeitsgerätschaft den Weg von der Kolbenseite zum Stangenraum freigibt, der mittels eines Rückschlagventiles absperrbar ist. Bei der eingangs beschriebenen Energie-Rückgewinnungsvorrichtung nach der PCT-WO 93/11363 wird die Senkgeschwindigkeit der Arbeitsgerätschaft dadurch kontrolliert, daß das Hydrauliköl über eine Drossel oder eine Düse zum Tank geführt wird. Beim Einsatz der Energie-Rückgewinnungsvorrichtung fließt diese Ölmenge eines Zylinders dann unmittelbar zum Hydrospeicher, wodurch die angesprochene Drossel oder Düse ihrer Aufgabe nicht mehr gerecht werden kann, was die Senkgeschwindigkeit derart erhöht, daß nicht mehr genügend Hydrauliköl über die Stangenseite dem Arbeitszylinder zugeführt wird, so daß es zu einem unkontrollierten Senkvorgang kommt. Durch die erfindungsgemäße Ausbildung der Vorrichtung ist eine Art Spülvorrichtung für die Stangenseite verwirklicht, die auch bei hoher Senkgeschwindigkeit genügend Öl zur Stangenseite führt, so daß der Absenkvorgang kontrolliert vonstatten geht. Sofern für diesen Absenkvorgang die Hydraulikpumpe auf die Stangenseite des Arbeitszylinders geschaltet wird, gelangt neben dem schwerkraftbedingten Rücklauf des Öls aus dem Kolbenraum über das 2/2-Wegeventil in den Stangenraum weiter Öl über die Hydraulikpumpe in denselben, was ein Absenken der Arbeitsgerätschaft im Eilgang erlaubt, ohne daß hierfür die Pumpe viel Öl auf die Stangenseite bringen müßte.

Bei einer weiteren bevorzugten Ausführungsform der erfindungsgemäßen Vorrichtung ist in die Verbindungsleitung, die den Hydrospeicher an den einen Kolbenraum anschließt, zwischen diesem und den hydraulisch entsperrbaren Rückschlagventilen ein 3/2-Wegeventil angeordnet, das in seiner unbetätigten Stellung den fluidführenden Weg zwischen diesem Kolbenraum und den entsperrbaren Rückschlagventilen freigibt. Aufgrund dieses 3/2-Wegeventiles läßt sich bedienerseitig vom Führerhaus aus bei Bedarf die Energie-Rückgewinnungsvorrichtung unmittelbar und vollständig abschalten. Auch hierdurch läßt es sich vermeiden, daß es zu einer verminderten Leistungsfähigkeit bei Arbeiten kommt, bei denen in Senkrichtung gesehen eine zusätzliche Kraft benötigt wird, ohne daß dieser aufzubringenden Kraft die Kraft aus dem Hydrospeicher entgegenwirken könnte.

Bei einer anderen Ausführungsform der erfindungsgemäßen Vorrichtung ist zwischen der Pumpe und dem jeweiligen Arbeitszylinder oder dem Hydromotor ein Wegeventil, vorzugsweise ein 4/3-Wegeventil, geschaltet, das mit einem weiteren Rückschlagventil fluidführend in Verbindung steht, dessen Schließteil dieselbe Öffnungsrichtung hat wie das Schließteil des in Fluidrichtung benachbart angeordneten entsperrbaren Rückschlagventiles. Vorzugsweise ist hierbei das weitere Rückschlagventil mittels eines weiteren Wegeventiles, vorzugsweise eines 3/2-Wegeventiles, hydraulisch entsperrbar, oder zwischen dem anderen entsperrbaren Rückschlagventil und dem Hydrospeicher ist ein Druckbegrenzungsventil angeordnet.

Bei der ersten Alternative kann durch das Öffnen des weiteren Rückschlagventiles mittels des weiteren Wegeventiles der Hydrospeicher bei Erreichen eines maximal vorgebbaren Speicherladedruckes abgekoppelt werden, so daß ein weiteres Bewegen oder Absenken der Arbeitsgerätschaft möglich ist, ohne daß dieser Bewegung hemmend der maximale Speicherdruck des Hydrospeichers entgegenwirkt. Dabei bleibt der vorgegebene Einstelldruck über die Betriebszeit konstant und eine zusätzliche Wärmeentwicklung ist vermieden.

Bei der zweiten Alternative wird ein Drucküberschuß nach Erreichen des maximal vorgebbaren Speicherladedruckes über das Druckbegrenzungsventil abgebaut, was insbesondere den Vorteil hat, daß beim Umschalten von der einen Bewegungssituation in die andere kein "Rucken" entsteht; jedoch bleibt der Einstelldruck über die Betriebszeit nicht konstant und es kommt zur Wärmeentwicklung. In Abhängigkeit von dem jeweiligen Verwendungszweck kann der einen oder der anderen Alternative der Vorzug gegeben werden.

Bei einer bevorzugten weiteren Ausgestaltung betreffend beide Ausführungsformen der erfindungsgemäßen Vorrichtung sind zumindest der Hydrospeicher und die Verbindungsleitung mit den entsperrbaren Rückschlagventilen über zum Tank hin führende Druckbegrenzungsventile abgesichert. Ein etwa ungewollter Druckanstieg im Hydrauliksystem ist somit ungefährlich.

Im folgenden ist die erfindungsgemäße Vorrichtung anhand zweier Schaltbilder näher erläutert.

Es zeigen:

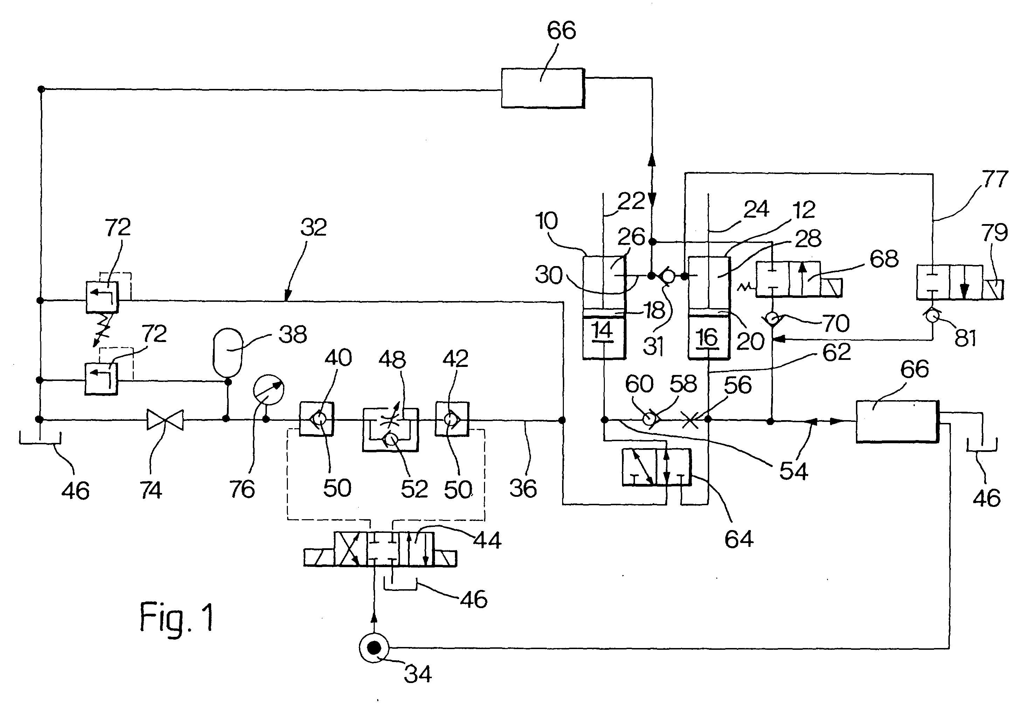

- Fig.1: eine erste Ausführungsform der erfindungsgemäßen Vorrichtung;
- Fig.2: eine zweite Ausführungsform der erfindungsgemäßen Vorrichtung.

Die erfindungsgemäße Vorrichtung zur Rückgewinnung von Energie, insbesondere von Lageenergie bei Arbeitsmaschinen gemäß der ersten Ausführungsform, weist zum Heben und Senken einer Arbeitsgerätschaft zwei hydraulisch betätigbare Arbeitszylinder 10 und 12 auf, die im wesentlichen gleich ausgebildet sind. Beide Arbeitszylinder 10,12 weisen jeweils einen Kolbenraum 14 bzw. 16 auf, der nach oben von einem Kolben 18,20 abgeschlossen ist, der jeweils eine Kolbenstange 22 bzw. 24 aufweist. Die beiden Kolbenstangen 22,24, die in den Arbeitszylindern 10,12 den Stangenraum 26,28 durchgreifen, sind an ihrem freien Ende jeweils an einer Arbeitsgerätschaft (nicht dargestellt) angelenkt. Diese Arbeitsgerätschaft kann aus einem Ausleger gebildet sein, der, sofern es sich bei der Arbeitsmaschine um einen Bagger handelt, ein Baggerarm mit Greifschaufel od.dgl. sein kann. Stangenseitig sind die beiden Arbeitszylinder 10,12 über eine Verbindungsleitung 30 fluidführend miteinander verbunden, die endseitig jeweils in die Stangen räume 26 und 28 mündet.

Der als Ganzes mit 32 bezeichnete Hydraulikkreis weist eine Hydraulikpumpe 34 auf, die üblicher Bauart ist und daher an dieser Stelle nicht näher beschrieben wird. Der in der Figur gesehen links dargestellte Arbeitszylinder 10 ist über eine Verbindungsleitung 36 an einen Hydrospeicher 38 anschließbar, der ebenfalls üblicher Bauart ist und aus einem Blasenspeicher, Membranspeicher oder Kolbenspeicher gebildet sein kann, bei denen eine gummielastische Membran bzw. ein Kolben einen Gasraum von einem Fluidraum trennt, der fluidführend an den Hydraulikkreis 32 angeschlossen ist. In der Verbindungsleitung 36 sind zwei hydraulisch entsperrbare Rückschlagventile 40,42 angeordnet, die mittels eines Wegeventiles, hier in Form eines elektrisch ansteuerbaren 4/3-Wegeventiles 44, beim Heben und Senken der Arbeitsgerätschaft abwechselnd aufgesteuert sind. Das 4/3-Wegeventil 44 ist an die Hydraulikpumpe 34 sowie an den Tank 46 angeschlossen. Zwischen den beiden entsperrbaren Rückschlagventilen 40 und 42 ist in der Verbindungsleitung 36 ein Drossel-Rückschlagventil 48 vorhanden, das vorzugsweise, wie in dem Schaltplan dargestellt, einen stufenlos veränderbaren Querschnitt hat. Die Schließteile 50 der beiden entsperrbaren Rückschlagventile 40,42 in der Verbindungsleitung 36 sind einander zugewandt und bewegen sich auf dem Weg in ihre Öffnungsstellung (nicht dargestellt) aufeinander zu. Das Schließteil 52 des Drossel-Rückschlagventiles 48 hat dieselbe Öffnungsrichtung wie das Schließteil 50 des in der Figur links dargestellten entsperrbaren Rückschlagventiles 40. Anstelle des Drossel-Rückschlagventiles 48 kann auch ein Volumenstromregler üblicher Bauart (nicht dargestellt) treten.

Die beiden Arbeitszylinder 10,12 stehen auf ihrer jeweiligen Kolbenseite über eine weitere Verbindungsleitung 54 miteinander in Verbindung, in die eine Drossel oder Blende 56 sowie ein Rückschlagventil 58 geschaltet sind, dessen Schließteil 60 in Richtung derselben Öffnungsstellung bewegbar ist wie das Schließteil 50 des in der Figur rechts dargestellten entsperrbaren Rückschlagventiles 42. Die Verbindungsleitung 54 mündet in die Verbindungsleitung 36 mit den beiden entsperrbaren Rückschlagventilen 40 und 42 sowie in eine Verbindungsleitung 62, die den Kolbenraum 16 des Arbeitszylinders 12 mit einem vorzugsweise elektrisch betätigbaren 3/2-Wegeventil 64 verbindet. Eine über den dahingehend gebildeten Kreuzungspunkt hinausgehende Verlängerung der Verbindungsleitung 54 mündet in einen als Schaltbox dargestellten und nicht näher spezifizierten Steuerblock 66, der ausgangsseitig fluidführend mit dem Tank 46 sowie mit der Hydraulikpumpe 34 in Verbindung steht. Dieser Steuerblock 66, der in der Figur zweimal dargestellt ist, kann jedoch in seiner Funktion in einer Schaltbox vereinigt sein, ist in der Lage, fluidführend die beiden Arbeitszylinder 10,12 stangenseitig über die Verbindungsleitung 30 an den Tank 46 anzuschließen. Der Steuerblock 66 ist von der Bedienperson der Arbeitsmaschine oder Arbeitsgerätschaft von Hand betätigbar, beispielsweise mittels eines sog. Joysticks, und erlaubt das Heben und Senken der jeweiligen Arbeitsgerätschaft.

Des weiteren ist an die Verbindungsleitung 30, die zu den beiden Stangenräumen der Arbeitszylinder und zu dem Steuerblock 66 führt, eine Ventilanordnung, vorzugsweise in Form eines elektrisch betätigbaren 2/2-Wegeventiles 68, angeschlossen, das beim Senken der Arbeitsgerätschaft den von der Hydraulikpumpe 34 zu den Stangenräumen 28 fluidführenden Weg freigibt, der mittels eines Rückschlagventiles 70 absperrbar ist, wobei in der Verbindungsleitung 30 zwischen den Stangenräumen 26 und 28 der beiden Arbeitszylinder 10 bzw. 12 ein weiteres Rückschlagventil 31 angeordnet ist, und zwar zwischen Arbeitszylinder 12 und der Abzweigung der Verbindungsleitung 30 an den Steuerblock 66. Der Hydrospeicher 38 und die Verbindungsleitung 36 mit den entsperrbaren Rückschlagventilen 40,42 sind über zum Tank 46 hin führende Druckbegrenzungsventile 72 üblicher Bauart abgesichert. Der Hydraulikkreis 32 läßt sich vom Tank 46 über ein Absperrventil 74 trennen und der Druck im Hydraulikkreis 32 ist über eine Manometereinrichtung 76 feststellbar. Zwischen Rückschlagventil 31 und Stangenraum 28 mündet eine Verbindungsleitung 77, in die ein 2/2-Wegeventil 79 sowie ein Rückschlagventil 81 geschaltet ist, und die an ihrem anderen Ende in Fluidrichtung vor dem Rückschlagventil 70 in die Verbindungsleitung 54 mündet.

Im folgenden wird die erfindungsgemäße Vorrichtung im Hinblick auf ihre Funktion anhand des Schaltplanes näher erläutert, der die Ruhestellung der Vorrichtung wiedergibt. Für das Senken der Arbeitsgerätschaft (nicht dargestellt) mittels der beiden Arbeitszylinder 10,12 wird das 4/3-Wegeventil 44 von der Bedienperson, beispielsweise durch den Steuerblock 66, derart betätigt, daß das Ventil seine in der Figur rechts dargestellte Teilstellung einnimmt. Bei betätigter Hydraulikpumpe 34 wird dann Fluid in die gestrichelt dargestellte Verbindungsleitung zu dem entsperrbaren Rückschlagventil 40 gebracht, dessen Schließteil 50 für einen Fluiddurchgang durch die Verbindungsleitung 36 aufgesteuert wird. Ferner öffnet das entsperrbare Rückschlagventil 42 durch den anstehenden Fluiddruck im Kolbenraum 14 des Arbeitszylinders 10, der über das Rückschlagventil 58 gegenüber dem Kolbenraum 16 des weiteren Arbeitszylinders 12 abgesperrt ist. Der Fluidstrom des Kolbenraumes 14 gelangt dann über die beiden entsperrbaren Rückschlagventile 40 und 42 und die Drosselstelle des Drossel-Rückschlagventiles 48 bei geschlossenem Schließteil 52 auf die Fluidseite des Hydrospeichers 38, der unter der Einwirkung seines Gaspolsters vorgespannt wird.

Das im Kolbenraum 16 sich befindende Fluid des Arbeitszylinders 12 kann über die Verbindungsleitungen 62 und 54 sowie den Steuerblock 66 in den Tank 46 abgeführt werden und/oder die Zufuhr für die Hydraulikpumpe 34 bilden. Um die Abwärtsbewegung der beiden Kolbenstangen 22,24 nicht zu behindern, wird das 2/2-Wegeventil 68 in seine rechts dargestellte durchgehende Schaltstellung gebracht, so daß eine Verbindung zwischen der Verbindungsleitung 54 und den Stangenräumen 26 und 28 gegeben ist. Das aus dem Kolbenraum 16 abfließende Fluid kann also bei entsperrtem Rückschlagventil 70 über das 2/2-Wegeventil 68 in die Stangenräume 26 und 28 nachgeführt werden, so daß dort kein Unterdruck entsteht, was die Senkbewegung der Kolben 18 und 20 beeinträchtigen könnte.

Bei entsprechender Betätigung des Steuerblockes 66 kann das unter Druck stehende Fluid der Hydraulikpumpe 34 in die Verbindungsleitung 54 zugeführt und über das 2/2-Wegeventil 68 zumindest in den Stangenraum 28 gepumpt werden, was die Senkbewegung erleichtert. Durch die einstellbare Drossel des Drossel-Rückschlagventiles 48 ist die Senkgeschwindigkeit weitgehend vorgebbar. Ferner kann die Absenkbewegung über den Steuerblock 66 in jeder beliebig vorgebbaren Stellung beendet werden.

Für einen Hebevorgang der Arbeitsgerätschaft nimmt das Ventil 44 seine in der Figur gesehen links dargestellte Schaltstellung ein. Die Hydraulikpumpe.34 entsperrt nunmehr das Rückschlagventil 42. Der in dem Hydrospeicher 38 bevorratete Fluiddruck wird nunmehr im Sinne einer Energie-Rückgewinnung für den Hebevorgang abgerufen und er steuert die Rückschlagventile 40 und 52 auf. Die in dem Hydrospeicher 38 bevorratete Fluidmenge gelangt dann unter Druck über die Verbindungsleitung 36 und das 3/2-Wegeventil 64 in seiner in der Figur dargestellten Schaltstellung in den unteren Kolbenraum 14 und unterstützt den Hebevorgang des Arbeitszylinders 10. Eine Versorgung des Arbeitszylinders 12 über den Hydrospeicher 38 erfolgt nicht, da die dahingehende Verbindungsleitung 34 über das Rückschlagventil 58 mit seinem Schließteil 60 abgesperrt bleibt.

Zur Unterstützung des Hebevorganges wird jedoch über die Hydraulikpumpe 34 Fluid unter Druck bei entsprechender Betätigung des Steuerblockes 66 an den unteren Kolbenraum 16 des Arbeitszylinders 12 abgegeben. In Abhängigkeit von den jeweils herrschenden Druckverhältnissen an den beiden Arbeitszylindern 10 und 12 kann auch über die Drossel oder Blende 56 bei aufgesteuertem Rückschlagventil 58 eine Versorgung des Kolbenraumes 14 des ersten Arbeitszylinders 10 mit von der Hydraulikpumpe 34 gefördertem Fluid erfolgen. Eine stangenseitige Versorgung erfolgt nicht, da das 2/2-Wegeventil 68 wieder seine in der Figur dargestellte Schließstellung eingenommen hat, die den dahingehenden Verbindungsweg unterbricht. Der Steuerblock 66 sorgt vielmehr dafür, daß eine im wesentlichen drucklose Verbindung der beiden Stangenräume 26 und 28 über die Verbindungsleitung 30 zum Tank 46 besteht, so daß bei der Aufwärtsbewegung der Kolbenstangen 22 und 24 mit Kolben 16 bzw. 18 das in den Stangenräumen 26 und 28 bevorratete Fluid hemmfrei abfließen kann. Beim Heben verbleibt das Wegeventil 68 in seiner gezeigten Stellung und das Wegeventil 79 wird in Durchflußrichtung geschaltet. Das Öl kann dann von der Stangenseite zur Kolbenseite hin fließen mit dem Vorteil, daß die Pumpe weniger Öl einpumpen muß und so für andere Vorgänge wie dem Drehen der Vorrichtung zur Verfügung steht.

Bei diesem Hebevorgang wird also die im Hydrospeicher 38 bevorratete Energie an die Hebeeinrichtung für die Arbeitsgerätschaft wiederum abgegeben, die beim Absenken gespeichert wurde, so daß im Sinne einer Energieeinsparung für den Hebevorgang nicht die gesamte Hebeenergie von der jeweiligen Hydraulikpumpe der Arbeitsmaschine aufzubringen ist.

Bei der Beschreibung der zweiten Ausführungsform werden diejenigen Komponenten und Anlagenteile, die der ersten Ausführungsform entsprechen, mit denselben, aber um jeweils 100 erhöhten Bezugszeichen wiedergegeben. Das zu der ersten Ausführungsform Gesagte gilt dann entsprechend auch für die zweite Ausführungsform, die im folgenden nur noch insofern beschrieben wird, als sie sich wesentlich von der ersten Ausführungsform unterscheidet.

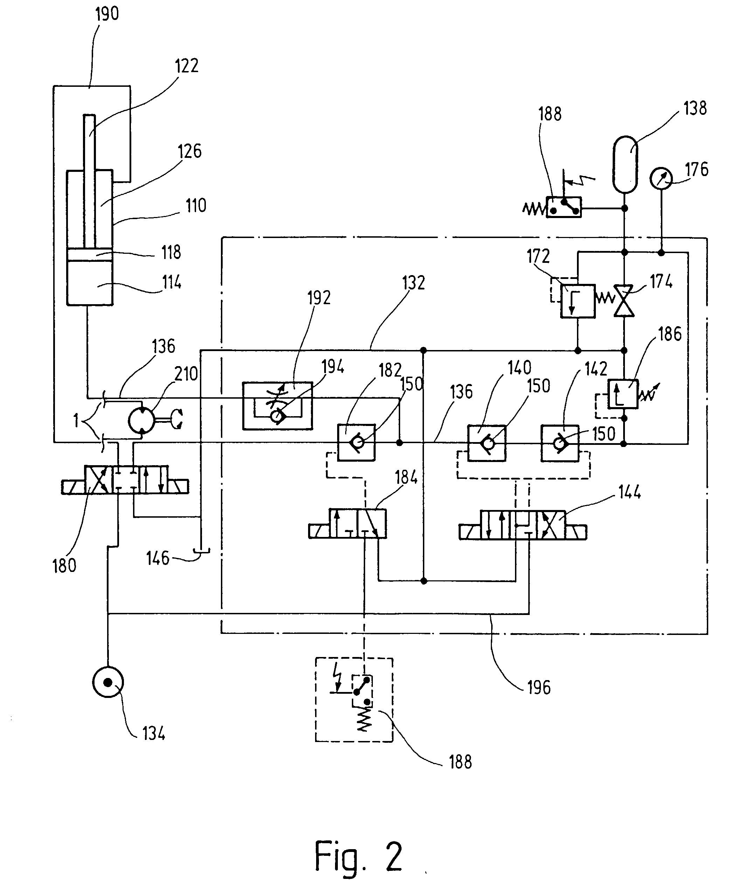

Bei der zweiten Ausführungsform wird nunmehr nur noch ein Arbeits- und Hydraulikzylinder 110 zum Bewegen der Arbeitsgerätschaft, insbesondere zum Heben und Senken derselben, eingesetzt. Sofern man den Stangenraum 126 nach der Fig.2 fluidführend mit einem Stangenraum eines weiteren Arbeitszylinders (nicht dargestellt) verbindet und diesen wiederum auf seiner Kolbenseite an die Verbindungsleitung 136 anschließt, lassen sich auch zwei Arbeitszylinder für die Bewegungsaufgabe einsetzen. Mit einer dahingehenden Parallelschaltung lassen sich beliebig weitere Arbeitszylinder (nicht dargestellt) für das Bewegen einer Arbeitsgerätschaft einsetzen.

Bei der zweiten Ausführungsform ist der Arbeitszylinder 110 mit seinem Stangenraum 126 über eine Verbindungsleitung 190 an ein Wegeventil 180 in Form eines 4/3-Wegeventiles angeschlossen. Dieses Wegeventil 180 ist wiederum fluidführend mit der Hydraulikpumpe 134 verbunden. Ein Nebenzweig 196 in dieser Verbindung führt zu dem bereits erläuterten 4/3-Wegeventil 144, das für die Entsperrung der beiden Rückschlagventile 140,142 zuständig ist. Das Wegeventil 180 weist des weiteren Anschlüsse zum Tank 146 auf sowie zu einem weiteren Rückschlagventil 182 mit Schließteil 150. Der Kolbenraum 114 mündet in die Verbindungsleitung 136, die weiter zu den Rückschlagventilen 140 und 182 führt. In den zum Kolbenraum 114 führenden Teil der Verbindungsleitung 136 ist eine Drossel mit veränderlichem Querschnitt 192 geschaltet, die über ein Rückschlagventil 194 abgesichert ist.

In einer Ausgestaltung der Ausführungsform nach der Fig.2 ist das weitere Rückschlagventil 182 von einem Wegeventil in Form eines 3/2-Wegeventiles 184 hydraulisch entsperrbar, das wiederum an einen Druckschalter 188 angeschlossen ist. Der in der Fig.2 unten dargestellte Druckschalter 188 entspricht dem Druckschalter 188 in Blickrichtung auf die Fig.2 oben rechts dargestellt, der an eine Anschlußleitung des Hydrospeichers 138 angeschlossen ist und dort den vorgebbaren maximalen Speicherladedruck feststellt. Des weiteren ist das 3/2-Wegeventil 184 an das 4/3-Wegeventil 144 angeschlossen sowie mit einem anderen Anschluß in die Verbindungsleitung 196 zwischen 4/3-Wegeventil 144 und der Pumpe 134 geführt. Bei einer dahingehenden Ausgestaltung kann auf das Druckbegrenzungsventil 186 zwischen dem Rückschlagventil 142 und dem Speicheranschluß verzichtet werden.

Zur besseren Verdeutlichung dieser Ausgestaltung wird im folgenden die Funktionsweise näher beschrieben. Beim Senken der Arbeitsgerätschaft, also beim Einfahren des Arbeitszylinders 110 ist das Wegeventil 180 in seine rechte Schaltstellung zu bringen und das Wegeventil 144 in seine linke. Das 3/2-Wegeventil 184 verbleibt bei zumindest teilweise entleertem Hydrospeicher 138 in seiner in der Fig.2 gezeigten Schaltstellung. Das Fluid strömt nun beim Absenken des Kolbens 118 aus dem Kolbenraum 114 über die Verbindungsleitung 136 und die Drossel 192 auf das Rückschlagventil 140 zu. Bei geschlossenem Rückschlagventil 182 wird durch den in der Verbindungsleitung 136 anstehenden Fluiddruck das Rückschlagventil 140 aufgesteuert. Ebenso ist das Rückschlagventil 142 über das Wegeventil 144 hydraulisch angesteuert, entsperrt und damit geöffnet. Der Hydrospeicher 138 wird mithin beim Absenken mit Hydrauliköl befüllt, wobei eine Absicherung des Hydrospeichers 138 über das Druckbegrenzungsventil 172 erfolgt und die Druckerhöhung am Manometer 176 abzulesen ist. Die Absenkgeschwindigkeit kann bei einer Drossel 192 mit veränderlichem Querschnitt von der Bedienperson eingestellt werden.

Mit zunehmender Befüllung des Hydrospeichers 138 setzt dieser seiner weiteren Befüllung einen Widerstand entgegen, was die gewünschte Absenkung der Kolbenstange 122 erschwert und verlangsamt. Der Druckschalter 188 kann diesen Zustand überwachen und bei einem vorgebbaren Druckschwellenwert, dem ein vorgebbarer Befüllungszustand im Hydrospeicher 138 zuzuordnen ist, das Wegeventil 184 in seine in der Fig.2 gesehen linke Schaltstellung bringen. Über die Pumpe 134 und die Verbindungsleitung 196 wird dann das Schließteil 150 des weiteren Rückschlagventiles 182 aufgesteuert, so daß der Weg über das Wegeventil 180 zum Tank 146 freigegeben ist und beim weiteren Absenken unter Abkopplung des Hydrospeichers 138 die zugehörige Fluidmenge des Kolbenraumes 114 sich in den Tank 146 entspannt. Auf diese Art und Weise läßt sich hemmungsfrei ein Absenken der Kolbenstange 122 erreichen. Unterstützt wird dies noch weiter dadurch, daß die Pumpe 134 über das Wegeventil 180 Fluid unter Druck in den Stangenraum 126 drückt und die Absenkbewegung des Kolbens 118 unterstützt.

Bei einer anderen Variante dieser zweiten Ausführungsform entfällt der Druckschalter 188 und das 3/2-Wegeventil 184. Statt dessen wird zwischen dem Anschluß des Hydrospeichers 138 und dem Rückschlagventil 142 ein Druckbegrenzungsventil 186 geschaltet, das über die Verbindungsleitung 132 Fluid an den Tank 146 abgibt, sobald ein vorgebbarer Fülldruckwert im Hydrospeicher 138 erreicht ist und mithin das Druckbegrenzungsventil 186 durchschaltet.

Zum Heben der Arbeitsgerätschaft, insbesondere zum Ausfahren der Kolbenstange 122, wird das Wegeventil 180 in seine linke Schaltstellung und das Wegeventil 144 in seine rechte Schaltstellung gemäß der Darstellung in der Fig.2 gebracht. Das Wegeventil 184 verbleibt in seiner, in der Fig.2 gezeigten Schaltstellung. Über die Pumpe 134 und das Wegeventil 180 sowie über die durch den Fluiddruck aufgesteuerten Rückschlagventile 182 und 194 wird unter Druck stehendes Fluid dem Kolbenraum 114 zugeführt. Ferner wird das Rückschlagventil 140 aufgesteuert und der sich entspannende Hydrospeicher 138 öffnet das Rückschlagventil 142, so daß das in ihm bevorratete Fluid unter Druck ebenfalls dem Kolbenraum 114 zugeführt wird und die so beim Absenken abgespeicherte Energie für einen Hebevorgang wieder zur Verfügung steht. Sobald die Schaltelemente wiederum die in der Fig.2 gezeigte Neutralstellung einnehmen, verbleibt der Arbeitszylinder 110 in seiner jeweils eingenommenen Betriebsstellung.

Die angesprochenen Wegeventile 144, 180 und 184 können zusammen oder jeweils für sich betrachtet auch Bestandteil eines eigenständigen Steuerölkreislaufes sein, wobei letztendlich auch in diesen Fällen die jeweils angesprochenen Rückschlagventile von diesen für einen Entsperrvorgang aufgesteuert werden. Neben einem Hydrospeicher 138 können auch mehrere Hydrospeicher (nicht dargestellt) eingesetzt werden, wobei gegebenenfalls jeder Hydrospeicher einer getrennten Bewegungssituation der Arbeitsgerätschaft zuzuordnen ist, so daß beispielsweise ein Speicher für das Heben und Senken eingesetzt wird und ein anderer Speicher für einen Schwenkvorgang.

Anstelle des Arbeitszylinders 110 kann, wie dies in der Fig.2 gezeigt ist, an der mit 1 angegebenen Stelle auch ein Hydromotor 210 geschaltet sein mit einer in beiden Drehrichtungen antreibbaren Abtriebseinheit, die einen Linearantrieb direkt oder über ein Getriebe antreiben kann; die aber auch mit einer Antriebseinheit, beispielsweise dem Radsatz eines Fahrzeuges, koppelbar ist. Die bei Umkehr der Bewegungsrichtung über den Hydromotor 210 in den Hydrospeicher 138 eingespeiste kinetische Energie läßt sich dann in der anderen umgeschalteten Bewegungsrichtung wieder über die Abtriebseinheit der jeweils vorgesehenen Arbeitseinheit zuführen. Mit einer vergleichbaren Einrichtung läßt sich derart auch hydrostatische Bremsenergie abspeichern und bevorraten.

## Patentansprüche

1. Vorrichtung zur Rückgewinnung von Energie, insbesondere von Lageenergie bei Arbeitsmaschinen, mit mindestens einem zum wechselweisen Bewegen, vorzugsweise zum Heben und Senken einer Arbeitsgerätschaft hydraulisch betätigbaren Arbeitszylinder (10,12;110), der kolbenseitig an einen Hydraulikkreislauf (32,132) mit einer Pumpe (34,134) und über eine Verbindungsleitung (36,136) an einen Hydrospeicher (38,138) anschließbar ist, dadurch gekennzeichnet, daß in der Verbindungsleitung (36,136) zwei hydraulisch entsperrbare Rückschlagventile (40,42;140,142) angeordnet sind, die mittels einer Steuereinheit, insbesondere in Form eines Wegeventiles (44,144) abhängig von der Bewegung der Arbeitsgerätschaft abwechselnd aufgesteuert sind.

2. Vorrichtung zur Rückgewinnung von Energie, insbesondere von kinetischer Energie, mit mindestens einem zum Ansteuern einer Arbeitseinheit dienenden Hydromotor (210), der an einen Hydraulikkreislauf (132) mit einer Pumpe (134) und über eine Verbindungsleitung (136) an einen Hydrospeicher (138) anschließbar ist, dadurch gekennzeichnet, daß in der Verbindungsleitung (136) zwei hydraulisch entsperrbare Rückschlagventile (140,142) angeordnet sind, die mittels einer Steuereinheit, insbesondere in Form eines Wegeventils (144) abhängig vom Bewegungszustand der Arbeitseinheit abwechselnd aufgesteuert sind.

3. Vorrichtung nach Anspruch 1, dadurch gekennzeichnet, daß zum Bewegen der Arbeitsgerätschaft zwei hydraulisch betätigbare Arbeitszylinder (10,12) vorhanden sind, die stangenseitig untereinander fluidführend verbunden sind und daß das Wegeventil (44,144) zum Entsperren der Rückschlagventile (40,42;140,142) ein 4/3-Wegeventil ist.

4. Vorrichtung nach einem der Ansprüche 1 bis 3, dadurch gekennzeichnet, daß die Schließteile (50,150) der beiden entsperrbaren Rückschlagventile (40,42; 140,142) in der Verbindungsleitung (36,136) einander zugewandt sind und auf dem Weg in ihre Öffnungsstellung sich aufeinander zubewegen.

5. Vorrichtung nach einem der Ansprüche 1 bis 4, dadurch gekennzeichnet, daß in der Verbindungsleitung (36) zwischen den beiden entsperrbaren Rückschlagventilen (40,42) ein Drosselrückschlagventil (48), vorzugsweise mit stufenlos veränderbarem Querschnitt, vorhanden ist.

6. Vorrichtung nach einem der Ansprüche 3 bis 5, dadurch gekennzeichnet, daß die beiden Arbeitszylinder (10,12) auf ihrer Kolbenseite über eine weitere Verbindungsleitung (54) miteinander in Verbindung stehen, in die eine Drossel (56) oder Blende (56) sowie ein Rückschlagventil (58) geschaltet sind.

7. Vorrichtung nach einem der Ansprüche 3 bis 6, dadurch gekennzeichnet, daß die beiden Arbeitszylinder (10,12) von mindestens einem Steuerblock (66) ansteuerbar sind, der kolbenseitig jeweils die Fluid- Zu- und Abfuhr steuert.

8. Vorrichtung nach einem der Ansprüche 3 bis 7, dadurch gekennzeichnet, daß der vom Hydrospeicher (38) abgesperrte Arbeitszylinder (12) stangenseitig an eine Ventilanordnung, vorzugsweise in Form eines 2/2-Wegeventiles (68), angeschlossen ist, die beim Senken der Arbeitsgerätschaft den von der Pumpe (34) zum Stangenraum (28) fluidführenden Weg freigibt, der mittels eines Rückschlagventiles (70) absperrbar ist, das für einen Eilgang alternativ in einer Verbindungsleitung (30) zwischen den Stangenräumen (26,28) der beiden Arbeitszylinder (10,12) angeordnet ist.

9. Vorrichtung nach einem der Ansprüche 3 bis 7, dadurch gekennzeichnet, daß in die Verbindungsleitung (36), die den Hydrospeicher (38) an den einen Kolbenraum (14) anschließt, zwischen diesem und den hydraulisch entsperrbaren Rückschlagventilen (40,42) ein 3/2-Wegeventil (64) angeordnet ist, das in seiner unbetätigten Stellung den fluidführenden Weg zwischen diesem Kolbenraum (14) und den entsperrbaren Rückschlagventilen (40,42) freigibt.

10. Vorrichtung nach einem der Ansprüche 1 bis 4, dadurch gekennzeichnet, daß zwischen der Pumpe (134) und dem jeweiligen Arbeitszylinder (110) oder dem Hydromotor (210) ein Wegeventil (180), vorzugsweise ein 4/3-Wegeventil, geschaltet ist, das mit einem weiteren Rückschlagventil (182) fluidführend in Verbindung steht, dessen Schließteil (150) dieselbe Öffnungsrichtung hat wie das Schließteil (150) des in Fluidrichtung benachbart angeordneten hydraulisch entsperrbaren Rückschlagventiles (140).

11. Vorrichtung nach Anspruch 10, dadurch gekennzeichnet, daß das weitere Rückschlagventil (182) mittels eines weiteren Wegeventiles (184), vorzugsweise eines 3/2-Wegeventiles, hydraulisch entsperrbar ist, oder daß zwischen dem entsperrbaren Rückschlagventil (142) und dem Hydrospeicher (138) ein Druckbegrenzungsventil (186) angeordnet ist.

12. Vorrichtung nach Anspruch 11, dadurch gekennzeichnet, daß das weitere Wegeventil (184) von einem Druckschalter (188) ansteuerbar ist, der bei Erreichen eines vorgebbaren maximalen Speicher-Ladedruckes des Speichers (138) die Öffnung des weiteren Rückschlagventiles (182) veranlaßt und daß vorzugsweise das weitere Wegeventil (184) an das Wegeventil (144) fluidführend angeschlossen ist.

## Claims

1. Device for the recovery of energy, in particular potential energy in working machines, with at least one working cylinder (10, 12; 110) able to be actuated hydraulically for the alternate movement, preferably for lifting and lowering a working apparatus, which cylinder can be connected on the piston side to a hydraulic circuit (32, 132) with a pump (34, 134) and by way of a connecting line (36, 136) to a hydraulic accumulator (38, 138), characterized in that located in the connecting line (36, 136) are two hydraulically releasable non-return valves (40, 42; 140, 142), which are controlled alternately by means of a control unit, in particular in the form of a multi-way valve (44, 144) depending on the movement of the working apparatus.

2. Device for the recovery of energy, in particular of kinetic energy, with at least one hydraulic motor (210) serving to control a working unit, which motor can be connected to a hydraulic circuit (132) with a pump (134) and by way of a connecting line (136) to a hydraulic accumulator (138), characterized in that located in the connecting line (136) are two hydraulically releasable non-return valves (140, 142), which are controlled alternately by means of a control unit, in particular in the form of a multi-way valve (144) depending on the state of movement of the working unit.

3. Device according to Claim 1, characterized in that provided for moving the working apparatus are two working cylinders (10, 12) which can be actuated hydraulically, which are connected to each other in a fluid-carrying manner on the rod side and that the multi-way valve (44, 144) for releasing the non-return valves (40, 42; 140, 142) is a 4/3-way valve.

4. Device according to one of Claims 1 to 3, characterized in that the closing parts (50, 150) of the two releasable non-return valves (40, 42; 140, 142) face each other in the connecting line (36, 136) and move towards each other on the way to their open position.

5. Device according to one of Claims 1 to 4, characterized in that present in the connecting line (36) between the two releasable non-return valves (40, 42) is a throttle non-return valve (48), preferably with an infinitely variable cross section.

6. Device according to one of Claims 3 to 5, characterized in that the two working cylinders (10, 12) are connected to each other on their piston side by way of a further connecting line (54), in which a throttle (56) for stop (56) as well as a non-return valve (58) are connected.

7. Device according to one of Claims 3 to 6, characterized in that the two working cylinders (10, 12) can be controlled by at least one control unit (66), which on the piston side respectively controls the supply and discharge of fluid.

8. Device according to one of Claims 3 to 7, characterized in that the working cylinder (12) isolated from the hydraulic accumulator (38) is connected on the rod side to a valve arrangement, preferably in the form of a 2/2-way valve (68), which at the time of lowering of the working apparatus releases the path carrying fluid from the pump (34) to the rod chamber (28), which can be isolated by means of a non-return valve (70), which is located for rapid travel alternatively in a connecting line (30) between the rod chambers (26, 28) of the two working cylinders (10, 12).

9. Device according to one of Claims 3 to 7, characterized in that located in the connecting line (36), which connects the hydraulic accumulator (38) to one piston chamber (14), between the latter and the hydraulically releasable non-return valves (40, 42) is a 3/2-way valve (64), which in its unactuated position releases the fluid-carrying path between this piston chamber (14) and the releasable non-return valves (40, 42).

10. Device according to one of Claims 1 to 4, characterized in that connected between the pump (134) and the respective working cylinder (110) or the hydraulic motor (210) is a multi-way valve (180), preferably a 4/3-way valve, which is in fluid-carrying connection with a further non-return valve (182), whereof the closing part (150) has the same opening direction as the closing part (150) of the hydraulically releasable non-return valve (140) located adjacent thereto in the fluid direction.

11. Device according to Claim 10, characterized in that the further non-return valve (182) is hydraulically releasable by means of a further multi-way valve (184), preferably a 3/2-way valve, or that a pressure-limiting valve (186) is located between the releasable non-return valve (142) and the hydraulic accumulator (138).

12. Device according to Claim 11, characterized in that the further multi-way valve (184) can be controlled by a pressure switch (188), which on reaching a predetermined maximum accumulator charging pressure of the accumulator (138), brings about the opening of the further non-return valve (182) and that preferably the further multi-way valve (184) is connected in a fluid-carrying manner to the multi-way valve (144).

## Revendications

1. Dispositif de récupération d'énergie, en particulier l'énergie potentielle des machines motrices, comprenant au moins un cylindre moteur (10, 12 ; 110) actionné par voie hydraulique pour exécuter un mouvement alternatif, de préférence pour les processus de levage et d'abaissement du dispositif de travail de la machine motrice, lequel cylindre moteur peut être relié du côté du piston à un circuit hydraulique (32, 132) comprenant une pompe (34, 134) et à un accumulateur hydraulique (38, 138) par l'intermédiaire d'une conduite de raccordement (36, 136), caractérisé en ce qu'il est prévu de monter dans la conduite de raccordement (36, 136) deux clapens anti-retour (40, 42 ; 140, 142) pilotés par voie hydraulique, qui sont commandés alternativement en position d'ouverture, en fonction du mouvement du dispositif de travail, à l'aide d'une unité de commande, conçue en particulier sous forme de vanne (44, 144).

2. Dispositif de récupération d'énergie cinétique comprenant au moins un moteur hydraulique (210) qui sert à actionner une machine motrice, lequel moteur peut être relié à un circuit hydraulique (132) comprenant une pompe (134) et à un accumulateur hydraulique (138) par l'intermédiaire d'une conduite de raccordement (136), caractérisé en ce qu'il est prévu de monter dans la conduite de raccordement (136) deux clapets anti-retour (140, 142) pilotés par voie hydraulique, qui sont commandés alternativement en position d'ouverture, en fonction du mouvement du dispositif de travail, à l'aide d'une unité de commande, conçue en particulier sous forme de vanne (144).

3. Dispositif selon la revendication 1, caractérisé en ce que les mouvements du dispositif de travail sont assurés par deux cylindres moteurs (10, 12) actionnés par voie hydraulique, qui communiquent l'un avec l'autre, par une conduite d'acheminement du fluide, par le côté de leur tige et en ce que la vanne (44, 144) destinée à débloquer les clapets anti-retour (40, 42 ; 140, 142) est une vanne à 4/3 voies.

4. Dispositif selon l'une quelconque des revendications 1 à 3, caractérisé en ce que les pièces d'obturation (50, 150) des deux clapets anti-retour (40, 42 ; 140, 142) sont orientées l'une vers l'autre dans la conduite de raccordement (36, 136) et se déplacent l'une vers l'autre dans leur trajet vers la position d'ouverture.

5. Dispositif selon l'une quelconque des revendications 1 à 4, caractérisé en ce qu'il est prévu de monter dans la conduite de raccordement (36), entre les deux clapets anti-retour pilotés (40, 42), un clapet anti-retour avec étranglement (48), de préférence avec une section variable progressivement.

6. Dispositif selon l'une quelconque des revendications 3 à 5, caractérisé en ce que les deux cylindres moteurs (10, 12) communiquent l'un avec l'autre du côté de leur piston par l'intermédiaire d'une conduite de raccordement supplémentaire (54), dans laquelle sont montés un clapet d'étranglement (56) ou un obturateur (56), ainsi qu'un clapet anti-retour (58).

7. Dispositif selon l'une quelconque des revendications 3 à 6, caractérisé en ce que les deux cylindres moteurs (10, 12) peuvent être commandés par au moins un bloc de commande (66), qui commande du côté du piston l'admission et l'évacuation du fluide.

8. Dispositif selon l'une quelconque des revendications 3 à 7, caractérisé en ce que le cylindre moteur (12) fermé par l'accumulateur hydraulique (38) communique par le côté de la tige avec une vanne, conçue de préférence sous forme de vanne à 2/2 voies (68), qui libère au moment de l'abaissement du dispositif de travail la voie d'acheminement du fluide depuis la pompe (34) jusqu'au compartiment pour tige (28), laquelle vanne peut être fermée par un clapet anti-retour (70) qui, pour assurer un mouvement rapide, est monté en alternative dans la conduite de raccordement (30) entre les compartiments pour tige (26, 28) des deux cylindres moteurs (10, 12).

9. Dispositif selon l'une quelconque des revendications 3 à 7, caractérisé en ce qu'il est prévu de monter dans la conduite de raccordement (36), qui relie l'accumulateur hydraulique (38) avec l'un des compartiments pour piston (14), entre ce dernier et les clapets anti-retour (40, 42), pilotés par voie hydraulique, une vanne à 3/2 voies (64) qui, dans sa position de repos, libère la voie d'acheminement du fluide entre ledit compartiment pour piston (14) et les clapets anti-retour pilotés (40, 42).

10. Dispositif selon l'une quelconque des revendications 1 à 4, caractérisé en ce qu'il est prévu de monter entre la pompe (134) et le cylindre moteur (110) correspondant ou le moteur hydraulique (210), une vanne (180), conçue de préférence sous forme de vanne à 4/3 voies, qui communique par une conduite d'acheminement du fluide avec un clapet anti-retour supplémentaire (182), dont la pièce d'obturation (150) s'ouvre dans le même sens que la pièce d'obturation (150) du clapet anti-retour (140) piloté par voie hydraulique, monté à proximité dans le sens du fluide.

11. Dispositif selon la revendication 10, caractérisé en ce que le clapet anti-retour supplémentaire (182) peut être débloqué par voie hydraulique par une vanne supplémentaire (184), de préférence une vanne à 3/2 voies, ou en ce qu'une soupape de limitation de pression (186) est montée entre le clapet anti-retour piloté (142) et l'accumulateur hydraulique (138).

12. Dispositif selon la revendication 11, caractérisé en ce que la vanne supplémentaire (184) peut être commandée par un interrupteur manométrique (188), qui commande l'ouverture du clapet anti-retour supplémentaire (182) lorsque la pression d'admission dans l'accumulateur (138) atteint une valeur maximale qui peut être définie, et en ce que, de préférence, la vanne supplémentaire (184) est reliée à la vanne (144) par une conduite d'acheminement du fluide.
